# EUROPEAN PATENT APPLICATION

(11) **EP 4 825 765 A1**
(43) Date of publication of application: **21.10.2026**
(21) Application number: 24920248.2
(22) Date of filing: 29.08.2024
(51) Int. Cl.: B65G 47/88, B65G 47/08, B65G 47/78

(54) **COMPONENT SUPPLY DEVICE**

(30) Priority: 25.01.2024 JP 2024009169
(71) Applicant: Seki Kogyo Co., Ltd., Hatsukaichi-shi, Hiroshima, 738-0034 (JP)
(72) Inventor: ODA, Naoki, Hatsukaichi-shi, Hiroshima 738-0034 (JP); MIURA, Seiji, Hatsukaichi-shi, Hiroshima 738-0034 (JP); SAKOTA, Kouji, Hatsukaichi-shi, Hiroshima 738-0034 (JP)
(74) Representative: Germain Maureau
(86) International application number: PCT/JP2024/031064
(87) International publication number: WO 2025/158699

(57) **Abstract**

A component supply device is provided. A guide mechanism includes a movable member that faces a discharge hole from above at a position downstream of a slit in a first direction and that moves between a first position and a second position in a second direction. The movable member includes: an introduction portion that is constituted by a cutout in an upstream side surface in the first direction and that receives a first component supplied from the slit when the movable member is at the first position; a closure portion that is constituted by the side surface so as to be adjacent to the introduction portion in the second direction and that closes the slit when the movable member is at the second position; and a hole portion that is constituted by a hole formed downstream of the side surface in the first direction and that causes the first component having moved from the introduction portion to fall into the discharge hole when the movable member is at the second position. A stop mechanism stops travel of a second component at the slit.

## Description

### TECHNICAL FIELD

The present disclosure relates to a component supply device.

### BACKGROUND ART

A component supply device (sorting and supplying device for fastening members) disclosed in Patent Document 1 is provided with a conveying groove for fastening members at an outlet of a feeder. Continuing from the conveying groove, a sorting groove is formed such that its groove width increases in a stepwise manner in the traveling direction of the members in accordance with the diameter size of the members.

### CITATION LIST

### PATENT DOCUMENT

PATENT DOCUMENT 1: Japanese Utility Model Publication No. S59-142082

### SUMMARY OF THE INVENTION

### TECHNICAL PROBLEM

Now, such a component supply device includes a pair of guide rails extending in parallel with each other so as to form a slit between the guide rails. The direction in which the guide rails extend includes a component in the horizontal direction. A plurality of components each having a shaft portion and a head portion successively travel through the slit between the pair of guide rails. The shaft portion of each component is inserted into the slit downward from above, and the head portion of each component is hooked on upper edge portions of the guide rails. Components that have traveled through the slit between the pair of guide rails fall into a discharge hole and are discharged.

In this type of component supply device, while a plurality of components successively travel through the slit, component jamming may occur, preventing further travel of the components through the slit.

In particular, when the component supply device includes a mechanism that guides components one by one from the slit between the pair of guide rails to the discharge hole, the second component from a downstream side among a plurality of components traveling through the slit between the pair of guide rails is prone to jamming.

The present disclosure has been made in view of the above circumstances, and an object of the present disclosure is to reduce component jamming in a component supply device.

### SOLUTION TO THE PROBLEM

A component supply device according to the present disclosure includes: a pair of guide rails that extend in parallel with each other in a first direction so as to form a slit between the guide rails and that are configured to allow a plurality of components, each including a shaft portion and a head portion having a larger diameter than the shaft portion, to travel through the slit in the first direction; a discharge mechanism disposed downstream of the slit in the first direction and having a discharge hole through which the components are discharged; a guide mechanism configured to guide the components one by one from the slit to the discharge hole; and a stop mechanism configured to stop travel of the components at the slit, the first direction including a component in a horizontal direction, the shaft portion of each component being inserted into the slit downward from above, and the head portion of each component being hooked on upper edge portions of the guide rails, the guide mechanism including a movable member that faces the discharge hole from above at a position downstream of the slit in the first direction and that is configured to move between a first position and a second position in a second direction, which is a width direction of the slit, the plurality of components including: a first component that is located first from a downstream side in the first direction; and a second component that is located second from the downstream side in the first direction, the movable member including: an introduction portion constituted by a cutout formed in a side surface, which is an upstream side surface of the movable member in the first direction, the introduction portion being configured to receive the first component supplied from the slit and introduced thereinto when the movable member is at the first position; a closure portion constituted by the side surface so as to be adjacent to the introduction portion in the second direction, the closure portion being configured to close the slit when the movable member is at the second position; and a hole portion constituted by a hole formed downstream of the side surface in the first direction, the hole portion being configured to cause the first component having moved from the introduction portion to fall into the discharge hole when the movable member is at the second position, the stop mechanism being configured to stop travel of the second component at the slit.

According to this configuration, when the movable member is at the first position, the first component is introduced from the slit between the guide rails into the introduction portion in the side surface of the movable member. When the movable member is at the second position, the first component moves from the introduction portion to the hole portion within the movable member and falls from the hole portion to the discharge hole. When the movable member is at the second position, the closure portion of the side surface of the movable member closes the slit between the guide rails. In this manner, the components are guided one by one (i.e., only the first component is guided) from the slit to the discharge hole.

The stop mechanism stops the travel of the second component at the slit between the guide rails, and thereby, the second component is substantially prevented from entering the introduction portion when the movable member is at the first position. Jamming of the second component can be reduced by reducing contact between the closure portion of the side surface of the movable member and the second component when the movable member is moved from the first position to the second position.

Thus, component jamming in the component supply device can be reduced.

In one embodiment, the stop mechanism stops the travel of the second component at the slit by pushing the second component in the second direction, thereby pressing the second component against the pair of guide rails.

This configuration makes it easier to stop the travel of the second component at the slit.

In one embodiment, the stop mechanism pushes the head portion of the second component in the second direction, thereby pressing the shaft portion of the second component against an inner surface, in the second direction, of the pair of guide rails.

According to this configuration, the second component can be readily pressed as compared with a case where the shaft portion of the second component is directly pressed.

In one embodiment, the stop mechanism is constituted by an actuator that moves, in the second direction, a rod extending in the second direction.

According to this configuration, the stop mechanism can be simply configured.

In one embodiment, the stop mechanism stops the second component at the slit when the movable member is at the first position, and does not stop the second component at the slit when the movable member is at the second position, and when the movable member is at the second position, the second component travels to a downstream end of the slit in the first direction, and the travel of the second component is blocked by the closure portion.

According to this configuration, the components can be readily guided one by one from the slit to the discharge hole.

In one embodiment, the pair of guide rails are inclined with respect to the horizontal direction so as to slope downward as the guide rails extend from an upstream side to a downstream side in the first direction.

In the case where the guide rails are inclined with respect to the horizontal direction, the second component is more likely to enter the introduction portion when the movable member is at the first position. Even in such a case, the stop mechanism can stop the travel of the second component at the slit, thereby substantially preventing the second component from entering the introduction portion when the movable member is at the first position.

In one embodiment, the components are headed bolts.

In this configuration, jamming of the headed bolts can be reduced.

### ADVANTAGES OF THE INVENTION

According to the present disclosure, it is possible to reduce component jamming in a component supply device.

### BRIEF DESCRIPTION OF THE DRAWINGS

[FIG. 1] FIG. 1 is a plan view of a bolt supply device at a first position without headed bolts.
[FIG. 2] FIG. 2 is a plan view of the bolt supply device at a second position without headed bolts.
[FIG. 3] FIG. 3 is a plan view of the bolt supply device at the first position with headed bolts.
[FIG. 4] FIG. 4 is a front sectional view, taken along line IV, of the bolt supply device at the first position with headed bolts.
[FIG. 5] FIG. 5 is a plan view of the bolt supply device at the second position with headed bolts.
[FIG. 6] FIG. 6 is a front sectional view, taken along line VI, of the bolt supply device at the second position with headed bolts.

### DESCRIPTION OF EMBODIMENTS

An embodiment of the present disclosure will be described in detail with reference to the drawings. The following description of preferred embodiments is merely illustrative in nature, and is not at all intended to limit the present disclosure, its applications, or its uses.

### (Bolt Supply Device)

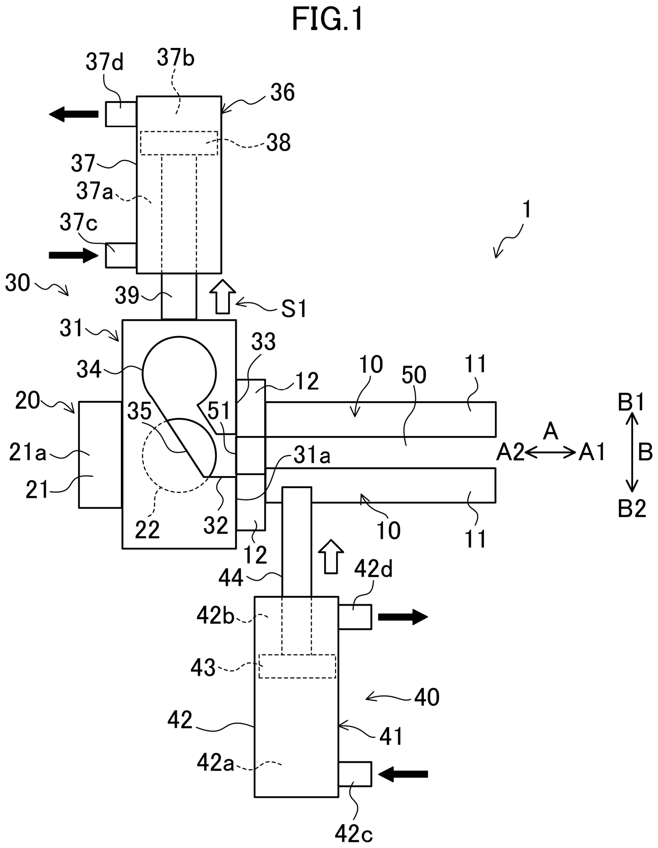

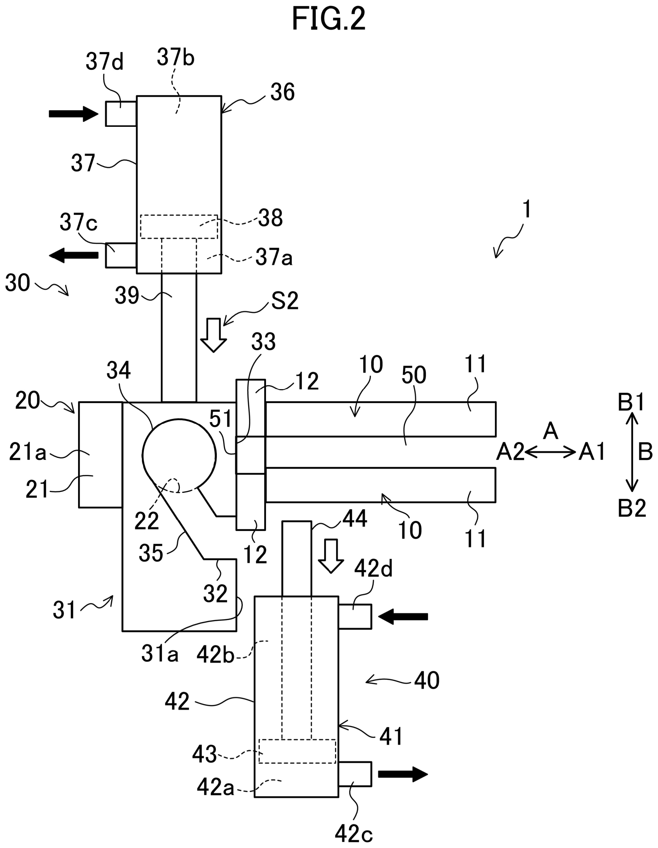

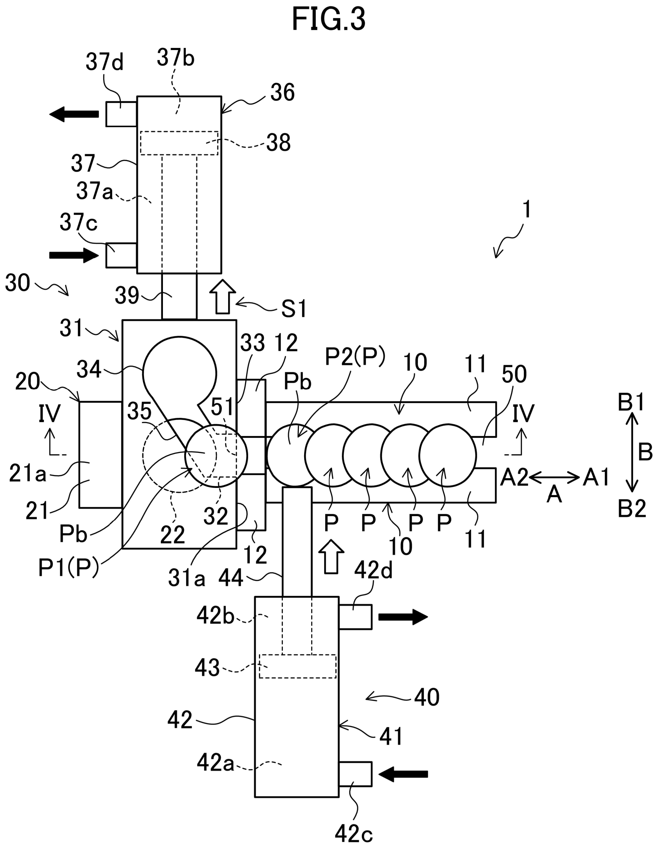

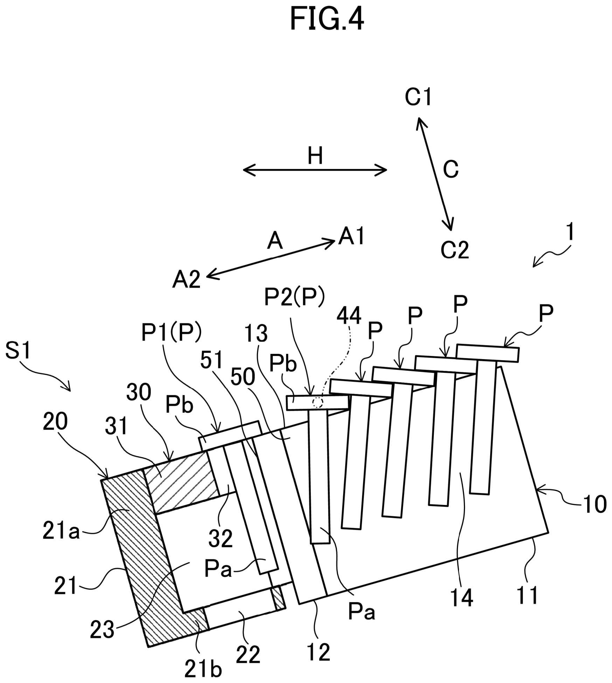

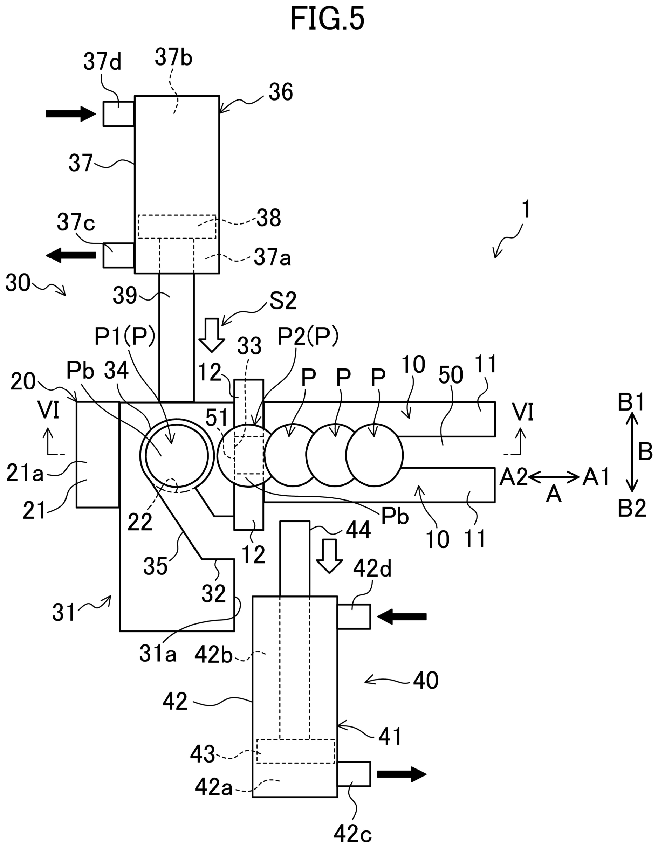

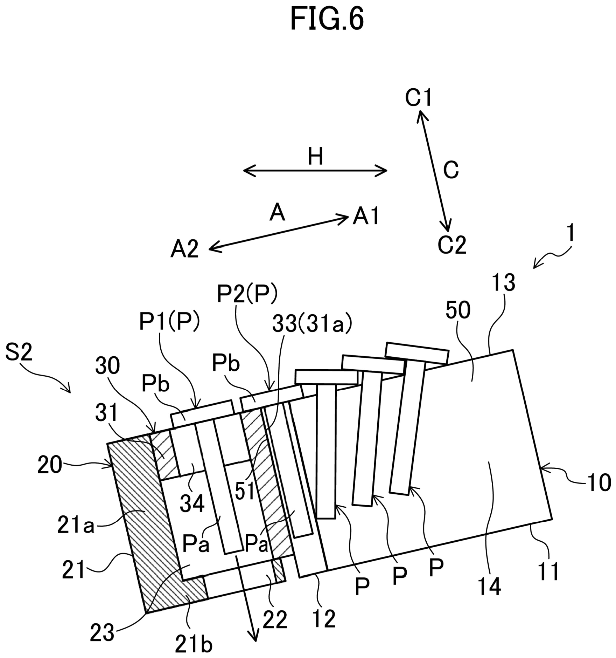

A bolt supply device 1 serving as a component supply device will be described. FIG. 1 is a plan view of the bolt supply device at a first position S1 without headed bolts P. FIG. 2 is a plan view of the bolt supply device 1 at a second position S2 without headed bolts P. FIG. 3 is a plan view of the bolt supply device 1 at the first position S1 with headed bolts P. FIG. 4 is a front sectional view, taken along line IV, of the bolt supply device 1 at the first position S1 with headed bolts P. FIG. 5 is a plan view of the bolt supply device 1 at the second position S2 with headed bolts P. FIG. 6 is a front sectional view, taken along line VI, of the bolt supply device 1 at the second position S2 with headed bolts P.

In the following description, with reference to FIG. 1, the left-right direction as viewed in the drawing is defined as a front-rear direction (indicated by A), the up-down direction as viewed in the drawing is defined as a left-right direction (indicated by B), and the direction perpendicular to the plane of the drawing is defined as an up-down direction (indicated by C). With reference to FIG. 1, the side closer to a viewer of the drawing is referred to as an upper side (above, upward), the side farther from the viewer is referred to as a lower side (below, downward), the left side as viewed in the drawing is referred to as a front side (front, frontward), the right side as viewed in the drawing is referred to as a rear side (rear, rearward), the lower side as viewed in the drawing is referred to as a left side (left, leftward), and the upper side as viewed in the drawing is referred to as a right side (right, rightward). The front-rear direction is an example of a first direction. The left-right direction is an example of a second direction.

The bolt supply device 1 includes a pair of (two) guide rails 10, a discharge mechanism 20, a guide mechanism 30, and a stop mechanism 40.

### (Headed Bolt)

The bolt supply device 1, serving as a component supply device according to the present embodiment, supplies a plurality of headed bolts P as a plurality of components. The headed bolts P are shown primarily in FIGS. 4 and 6. The headed bolts P are, for example, weld bolts.

Each of the headed bolts P includes a shaft portion Pa and a head portion Pb. The shaft portion Pa extends straight. The shaft portion Pa has a cylindrical shape. The outer periphery of the shaft portion Pa is threaded. The head portion Pb has a disk shape. The head portion Pb is provided at a proximal end portion of the shaft portion Pa. The outer diameter of the head portion Pb is larger than the outer diameter of the shaft portion Pa. Although not shown, one or more weld projections are provided on an upper surface or lower surface of the head portion Pb.

### (Guide Rail)

The pair of guide rails 10 extend in parallel (specifically, geometrically parallel) in the front-rear direction with a spacing (gap, clearance) interposed between the guide rails in the left-right direction. That is, the pair of guide rails 10 extend in parallel with each other in the front-rear direction so as to form a slit 50 (having a width in the left-right direction) therebetween.

Each guide rail 10 is formed in a substantially rectangular parallelepiped shape with longer sides along the front-rear direction and shorter sides along the left-right direction and the up-down direction. The front-rear direction corresponds to the length direction of the slit 50. The left-right direction corresponds to the width direction of the slit 50.

Such a plurality of headed bolts P travel frontward in the front-rear direction through the slit 50 along the guide rails 10 (see FIGS. 3 to 6). The front-rear direction in which the headed bolts P travel includes a component in the horizontal direction (indicated by H). The front-rear direction in which the headed bolts P travel is a direction from the rear side toward the front side. An upstream side in the front-rear direction in which the headed bolts P travel is the rear side (indicated by A1). A downstream side in the front-rear direction in which the headed bolts P travel is the front side (indicated by A2).

As shown in FIGS. 4 and 6, the guide rails 10 are inclined with respect to the horizontal direction so as to slope downward, i.e., from the upper side (indicated by C1) toward the lower side (indicated by C2) in the up-down direction, as the guide rails extend from the upstream side (rear) toward the downstream side (front) in the front-rear direction. The inclination angle of the guide rails 10 with respect to the horizontal direction is preferably 10° or more.

The shaft portion Pa of each headed bolt P is inserted into the slit 50 downward from above, and the head portion Pb of each headed bolt P is hooked on upper edge portions 13 of the guide rails 10 (see FIGS. 4 and 6). The shaft portion Pa is inserted into the slit 50 downward from above, and the head portion Pb is hooked on the upper edge portions 13 of the guide rails 10, so that the headed bolt P is suspended in the slit 50 between the pair of guide rails 10.

The headed bolts P travel from rear toward front through the slit 50 by their own weights along the guide rails 10 obliquely downward with respect to the horizontal direction.

The pair of guide rails 10 include: a pair of main guide rails 11 located on the upstream (rear) side in the front-rear direction; and a pair of sub guide rails 12 provided at downstream end portions (front end portions) of the main guide rails 11 in the front-rear direction. Left and right outer end portions (left end portion and right end portion) of the pair of sub guide rails 12 are located outward in the left-right direction (leftward and rightward) of left and right outer end portions (left end portion and right end portion) of the pair of main guide rails 11, respectively.

The headed bolts P are fed to an upstream end (rear end) of the slit 50 between the guide rails 10 from a bolt shooter (not shown), a bolt sorter (not shown), or the like in the preceding process.

### (Discharge Mechanism)

The discharge mechanism 20 is located downstream (frontward) of a downstream end (front end) 51, in the front-rear direction, of the slit 50 between the guide rails 10. The discharge mechanism 20 includes a discharge member 21.

As shown in FIGS. 4 and 6, the discharge member 21 is located downstream (frontward) of front ends of the guide rails 10 in the front-rear direction so as to be spaced apart from the guide rails 10 in the front-rear direction. The discharge member 21 is formed in a substantially L-shape as viewed in the left-right direction.

The discharge member 21 includes a first portion 21a and a second portion 21b. The first portion 21a is formed in a substantially rectangular plate-like shape having its thickness direction in the front-rear direction and extending in the left-right direction and the up-down direction. The first portion 21a faces the front ends of the guide rails 10. A space is formed between a rear surface of the first portion 21a of the discharge member 21 and front surfaces of the guide rails 10.

The second portion 21b is formed in a substantially rectangular plate-like shape having its thickness direction in the up-down direction and extending in the left-right direction and the front-rear direction. The second portion 21b is connected to a lower end of the first portion 21a and extends from the lower end of the first portion 21a toward the upstream side (rearward) in the front-rear direction.

A discharge hole 22 is formed through the second portion 21b of the discharge member 21 of the discharge mechanism 20. In other words, the second portion 21b of the discharge member 21 of the discharge mechanism 20 has the discharge hole 22. The discharge hole 22 extends through the second portion 21b of the discharge member 21 in the up-down direction. The inner diameter of the discharge hole 22 is larger than the outer diameter of the head portion Pb of each headed bolt P.

Through the discharge hole 22, the headed bolts P are discharged to the outside. The headed bolts P discharged through the discharge hole 22 are fed to the subsequent process (for example, to a bolt feeding mechanism for feeding headed bolts P to a resistance welding apparatus) via a tube or the like (not shown).

A discharge chamber 23 is formed in a region surrounded by the discharge member 21 (the first portion 21a and the second portion 21b) of the discharge mechanism 20 and by the guide rails 10. The discharge hole 22 faces the discharge chamber 23.

### (Guide Mechanism)

The guide mechanism 30 includes a movable member 31 and an actuator 36. The movable member 31 is basically formed in a substantially rectangular plate-like shape having its thickness direction in the up-down direction and extending in the left-right direction and the front-rear direction. The left-right dimension of the movable member 31 is larger than the front-rear dimension thereof.

The movable member 31 is located downstream (frontward) of the guide rails 10 in the front-rear direction and upstream (rearward) of the first portion 21a of the discharge member 21 of the discharge mechanism 20 in the front-rear direction. The movable member 31 is located at the same height as upper end portions of the guide rails 10 (and of the discharge member 21 of the discharge mechanism 20) in the up-down direction.

As shown in FIGS. 4 and 6, the movable member 31 faces the discharge hole 22 from above at a position downstream (frontward), in the front-rear direction, of the slit 50 between the guide rails 10. It can also be said that the movable member 31 forms an upper wall of the discharge chamber 23.

As shown in FIGS. 1 and 2, the movable member 31 moves in a sliding manner between a first position S1 on the right (indicated by B1) in the left-right direction and a second position S2 on the left (indicated by B2) in the left-right direction.

The movable member 31 includes an introduction portion 32, a closure portion 33, a hole portion 34, and a connection portion 35. The introduction portion 32 is constituted by a cutout formed in a rear side surface 31a, which is an upstream (rear) side surface of the movable member 31 in the front-rear direction.

The introduction portion 32 extends, in the movable member 31, from the rear side surface 31a toward the downstream side (frontward) in the front-rear direction. The introduction portion 32 extends through the movable member 31 in the up-down direction. The width of the introduction portion 32 is larger than the outer diameter of the shaft portion Pa of each headed bolt P and smaller than the outer diameter of the head portion Pb of each headed bolt P.

The closure portion 33 is also referred to as a closing portion. The closure portion 33 is constituted by the rear side surface 31a of the movable member 31, which is the upstream (rear) side surface in the front-rear direction. The closure portion 33 is adjacent to the introduction portion 32 in the left-right direction. In the rear side surface 31a of the movable member 31, no cutout is formed in the closure portion 33. The closure portion 33 extends further downward than the introduction portion 32 in the rear side surface 31a of the movable member 31. In the rear side surface 31a of the movable member 31, a lower end portion of the closure portion 33 is located below the introduction portion 32. The closure portion 33 extends straight in the left-right direction and the up-down direction. The up-down dimension of the closure portion 33 is larger than the left-right dimension thereof. The closure portion 33 is located rightward of (i.e., toward the first position S1 with respect to) the introduction portion 32 in the left-right direction.

In the movable member 31, the hole portion 34 is constituted by a hole formed downstream (frontward) of the rear side surface 31a in the front-rear direction. The hole portion 34 is located downstream (frontward) of the rear side surface 31a (the introduction portion 32 and the closure portion 33) in the front-rear direction. The hole portion 34 is located rightward of (i.e., toward the first position S1 with respect to) the introduction portion 32 in the left-right direction. The hole portion 34 is located at substantially the same position as the closure portion 33 in the left-right direction.

The hole portion 34 extends through the movable member 31 in the up-down direction. The hole portion 34 has a substantially circular shape. The inner diameter of the hole portion 34 is larger than the outer diameter of the head portion Pb of each headed bolt P.

In the movable member 31, the connection portion 35 connects a front end of the introduction portion 32 and a left end of the hole portion 34 to each other. The connection portion 35 extends obliquely from left to right as it extends from rear to front. The connection portion 35 extends through the movable member 31 in the up-down direction. The width of the connection portion 35 is larger than the outer diameter of the shaft portion Pa of each headed bolt P and smaller than the outer diameter of the head portion Pb of each headed bolt P.

The actuator 36 is constituted by an air cylinder mechanism. The actuator 36 is located rightward of the movable member 31 in the left-right direction. The actuator 36 is located at substantially the same position as the movable member 31 in the front-rear direction. The actuator 36 includes a cylinder 37, a piston 38, and a rod 39.

The cylinder 37 extends in the left-right direction. The piston 38 is disposed inside the cylinder 37. The rod 39 is connected to a left surface of the piston 38 and extends in the left-right direction. The rod 39 extends leftward from the left surface of the piston 38 through a distal end wall of the cylinder 37 and protrudes leftward to the outside of the cylinder 37. A distal end (left end) of the rod 39 is connected to a right side surface of the movable member 31.

Within the cylinder 37, a first air chamber 37a is formed leftward of (i.e., on a rod 39 side of) the piston 38. Within the cylinder 37, a second air chamber 37b is formed rightward of (on the side opposite to the rod 39 side of) the piston 38.

The cylinder 37 is provided with, on its outer wall, a first port 37c communicating with the first air chamber 37a and a second port 37d communicating with the second air chamber 37b. The first port 37c and the second port 37d communicate with an air source (not shown) such as an air pump. Air (shown by black arrows) is supplied from the air pump to the first air chamber 37a and the second air chamber 37b via the first port 37c and the second port 37d.

When air is supplied to the first air chamber 37a, the piston 38 and the rod 39 move rightward (retract), and the movable member 31 is positioned at the first position S1 on the right (as indicated by a hollow arrow). When air is supplied to the second air chamber 37b, the piston 38 and the rod 39 move leftward (protrude), and the movable member 31 is positioned at the second position S2 on the left (as indicated by a hollow arrow).

### (Stop Mechanism)

The stop mechanism 40 is located leftward of the guide rails 10 in the left-right direction. The stop mechanism 40 is located in the vicinity of front end portions (downstream end portions) of the guide rails 10 in the front-rear direction. The stop mechanism 40 is located rearward (upstream) of the movable member 31 in the front-rear direction. The stop mechanism 40 is constituted by an actuator 41. The actuator 41 is constituted by an air cylinder mechanism. The actuator 41 includes a cylinder 42, a piston 43, and a rod 44.

The cylinder 42 extends in the left-right direction. The piston 43 is disposed inside the cylinder 42. The rod 44 is connected to a right surface of the piston 43 and extends in the left-right direction. The rod 44 extends rightward from the right surface of the piston 43 through a distal end wall of the cylinder 42 and protrudes rightward to the outside of the cylinder 42. A distal end (right end) of the rod 44 moves in the left-right direction so as to cover a part of the pair of guide rails 10 from above.

Within the cylinder 42, a first air chamber 42a is formed leftward of (i.e., on the side opposite to a rod 44 side of) the piston 43. Within the cylinder 42, a second air chamber 42b is formed rightward of (on the rod 44 side of) the piston 43.

The cylinder 42 is provided with, on its outer wall, a first port 42c communicating with the first air chamber 42a and a second port 42d communicating with the second air chamber 42b. The first port 42c and the second port 42d communicate with an air source (not shown) such as an air pump. Air (shown by black arrows) is supplied from the air pump to the first air chamber 42a and the second air chamber 42b via the first port 42c and the second port 42d.

When air is supplied to the first air chamber 42a, the piston 43 and the rod 44 move rightward (protrude), and the distal end of the rod 44 is positioned to the right (as indicated by a hollow arrow) and is located above the pair of guide rails 10. When air is supplied to the second air chamber 42b, the piston 43 and the rod 44 move leftward (retract), and the distal end of the rod 44 is positioned to the left (as indicated by a hollow arrow) and moves away from the pair of guide rails 10 to the left. In this manner, the actuator 41 moves the rod 44 in the left-right direction by air actuation.

### (Supply of Headed Bolts)

The supply of headed bolts P by the bolt supply device 1 will be described with reference to FIGS. 3 to 6. A plurality of headed bolts P are successively fed from a bolt shooter (not shown), a bolt sorter (not shown), or the like in the preceding process to the upstream end (rear end) of the slit 50 between the guide rails 10. The headed bolts P travel from rear toward front through the slit 50 by their own weights along the guide rails 10 obliquely downward with respect to the horizontal direction.

The shaft portion Pa of each headed bolt P is inserted into the slit 50 downward from above, and the head portion Pb of each headed bolt P is hooked on the upper edge portions 13 of the guide rails 10 (see FIGS. 4 and 6). As shown in FIGS. 4 and 6, the head portions Pb of the plurality of headed bolts P tend to overlap one another in the up-down direction.

The plurality of headed bolts P include: a first headed bolt P1, serving as a first component located first from the downstream side (front) in the front-rear direction; and a second headed bolt P2, serving as a second component located second from the downstream side (front) in the front-rear direction. The first headed bolt P1 is at the head (frontmost) position. The second headed bolt P2 is next to (behind) the first headed bolt P1.

As shown in FIGS. 3 and 4, as air is supplied to the first air chamber 37a in the actuator 36 of the guide mechanism 30, the rod 39 moves rightward (retracts). As a result, the movable member 31 is positioned at the first position S1 that is on the right.

When the movable member 31 is at the first position S1, the introduction portion 32 of the rear side surface 31a of the movable member 31 faces and communicates with the downstream end 51 of the slit 50 between the guide rails 10.

When the movable member 31 is at the first position S1, the first headed bolt P1 supplied from the slit 50 between the guide rails 10 is introduced into the introduction portion 32 of the rear side surface 31a of the movable member 31.

When the movable member 31 is at the first position S1, the closure portion 33 of the rear side surface 31a of the movable member 31 is offset rightward with respect to the downstream end 51 of the slit 50 between the guide rails 10 and does not face the downstream end 51 of the slit 50.

When the movable member 31 is at the first position S1, the hole portion 34 of the movable member 31 is offset rightward with respect to the discharge hole 22 of the discharge mechanism 20 and does not face the discharge hole 22.

The stop mechanism 40 stops the travel of the headed bolts P at the slit 50 between the guide rails 10. In particular, when the movable member 31 is at the first position S1, the stop mechanism 40 stops the travel of the second headed bolt P2 at the slit 50 between the guide rails 10.

Specifically, when the movable member 31 is at the first position S1, air is supplied to the first air chamber 42a in the actuator 41 of the stop mechanism 40, and thereby the rod 44 moves rightward (protrudes). The distal end of the rod 44 is positioned to the right and is located above the pair of guide rails 10.

Then, when the movable member 31 is at the first position S1, the rod 44 of the actuator 41 of the stop mechanism 40 pushes the second headed bolt P2 rightward in the left-right direction, thereby pressing the second headed bolt P2 against the pair of guide rails 10, to stop the travel of the second headed bolt P2 at the slit 50 between the guide rails 10.

In other words, when the movable member 31 is at the first position S1, the rod 44 of the actuator 41 of the stop mechanism 40 pushes the second headed bolt P2 rightward in the left-right direction, whereby the second headed bolt P2 is pressed against the pair of guide rails 10, so that the travel of the second headed bolt P2 is stopped at the slit 50 between the guide rail 10.

More specifically, when the movable member 31 is at the first position S1, the rod 44 of the actuator 41 of the stop mechanism 40 pushes the head portion Pb of the second headed bolt P2 rightward in the left-right direction, thereby pressing the shaft portion Pa of the second headed bolt P2 against an inner surface 14 (see FIG. 4) of the pair of guide rails 10, which faces leftward in the left-right direction.

The travel of the second headed bolt P2 is stopped at the slit 50 between the guide rails 10, and thereby, the second headed bolt P2 is substantially prevented from entering the introduction portion 32 of the rear side surface 31a of the movable member 31 of the guide mechanism 30.

As shown in FIGS. 5 and 6, as air is supplied to the second air chamber 37b in the actuator 36 of the guide mechanism 30, the rod 39 moves leftward (protrudes). As a result, the movable member 31 is positioned at the second position S2 that is on the left.

When the movable member 31 is at the second position S2, the introduction portion 32 of the rear side surface 31a of the movable member 31 is offset leftward with respect to the downstream end 51 of the slit 50 between the guide rails 10, and neither faces nor communicates with the downstream end 51 of the slit 50.

When the movable member 31 is at the second position S2, the closure portion 33 of the rear side surface 31a of the movable member 31 faces the downstream end 51 of the slit 50 between the guide rails 10 and closes the downstream end 51 of the slit 50.

When the movable member 31 is at the second position S2, the hole portion 34 of the movable member 31 faces the discharge hole 22 of the discharge mechanism 20.

When the movable member 31 is at the second position S2, the first headed bolt P1 moves, within the movable member 31, from the introduction portion 32 to the hole portion 34 via the connection portion 35.

When the movable member 31 is at the second position S2, the first headed bolt P1 that has moved from the introduction portion 32 to the hole portion 34 via the connection portion 35 falls downward from the hole portion 34 toward the discharge hole 22 (see an arrow in FIG. 6). In other words, the hole portion 34 causes the first headed bolt P1 that has moved from the introduction portion 32 (via the connection portion 35) to fall into the discharge hole 22 when the movable member 31 is at the second position S2.

Through the discharge hole 22, the first headed bolt P1 is discharged to the outside. The first headed bolt P1 discharged through the discharge hole 22 is fed to the subsequent process (for example, to a bolt feeding mechanism for feeding headed bolts P to a resistance welding apparatus) via a tube or the like (not shown).

When the movable member 31 is at the second position S2, air is supplied to the second air chamber 42b in the actuator 41 of the stop mechanism 40, and thereby the rod 44 moves leftward (retracts). The distal end of the rod 44 is positioned to the left and moves away from the pair of guide rails 10 to the left.

When the movable member 31 is at the second position S2, the rod 44 of the actuator 41 of the stop mechanism 40 does not push the second headed bolt P2 in the left-right direction. As a result, the second headed bolt P2 travels to the downstream end (front end) 51, located downstream in the front-rear direction, of the slit 50 between the guide rails 10. The travel of the second headed bolt P2 is then blocked (stopped) by the closure portion 33 of the rear side surface 31a of the movable member 31.

In summary, the stop mechanism 40 stops the second headed bolt P2 at the slit 50 when the movable member 31 is at the first position S1, and the stop mechanism 40 does not stop the second headed bolt P2 at the slit 50 when the movable member 31 is at the second position S2. When the movable member 31 is at the second position S2, the second headed bolt P2 travels to the downstream end (front end) 51 of the slit 50 in the front-rear direction, and the travel of the second headed bolt P2 is blocked (stopped) by the closure portion 33.

The stop mechanism 40 stops the travel of the second headed bolt P2 at the slit 50 between the guide rails 10, and the guide mechanism 30 guides only the first headed bolt P1 from the slit 50 between the guide rails 10 to the discharge hole 22.

The guide mechanism 30 guides the headed bolts P one by one from the slit 50 between the guide rails 10 to the discharge hole 22 while the movable member 31 moves from the first position S1 to the second position S2.

### (Functions and Effects)

According to the present embodiment, when the movable member 31 is at the first position S1, the first headed bolt P1 is introduced from the slit 50 between the guide rails 10 into the introduction portion 32 of the rear side surface 31a of the movable member 31. When the movable member 31 is at the second position S2, the first headed bolt P1 moves from the introduction portion 32 to the hole portion 34 within the movable member 31 and falls from the hole portion 34 to the discharge hole 22. When the movable member 31 is at the second position S2, the closure portion 33 of the rear side surface 31a of the movable member 31 closes the slit 50 between the guide rails 10. In this manner, only the first headed bolt P1 is guided, one by one, from the slit 50 to the discharge hole 22.

The stop mechanism 40 stops the travel of the second headed bolt P2 at the slit 50 between the guide rails 10, and thereby, the second headed bolt P2 is substantially prevented from entering the introduction portion 32 when the movable member 31 is at the first position S1. Jamming of the second headed bolt P2 can be reduced by reducing contact between the closure portion 33 of the rear side surface 31a of the movable member 31 and the second headed bolt P2 when the movable member 31 is moved from the first position S1 to the second position S2.

Thus, jamming of the headed bolts P in the bolt supply device 1 can be reduced.

This is particularly effective when the shaft portion Pa of each headed bolt P is long (and thus prone to catching).

The stop mechanism 40 pushes the second headed bolt P2 in the left-right direction, thereby pressing the second headed bolt P2 against the pair of guide rails 10, to stop the travel of the second headed bolt P2 at the slit 50. This configuration makes it easier to stop the travel of the second headed bolt P2 at the slit 50 than in a case where the stop mechanism 40 pushes the second headed bolt P2 in the up-down direction or the front-rear direction.

As shown in FIGS. 4 and 6, the head portions Pb of the plurality of headed bolts P tend to overlap one another in the up-down direction. In view of such circumstances as well, the above-described configuration in which the stop mechanism 40 pushes the second headed bolt P2 in the left-right direction is advantageous as compared with a configuration in which the stop mechanism 40 pushes the second headed bolt P2 in the up-down direction.

The stop mechanism 40 presses the shaft portion Pa of the second headed bolt P2 against the inner surface 14, in the left-right direction, of the pair of guide rails 10 by pushing the head portion Pb of the second headed bolt P2 in the left-right direction. According to this configuration, the second headed bolt P2 can be readily pressed as compared with a case where the shaft portion Pa of the second headed bolt P2 is directly pressed.

The stop mechanism 40 is constituted by the actuator 41 that moves, in the left-right direction, the rod 44 extending in the left-right direction. According to this configuration, the stop mechanism 40 can be simply configured.

The stop mechanism 40 stops the second headed bolt P2 at the slit 50 when the movable member 31 is at the first position S1, and does not stop the second headed bolt P2 at the slit 50 when the movable member 31 is at the second position S2. Furthermore, when the movable member 31 is at the second position S2, the second headed bolt P2 travels to the downstream end (front end) 51 of the slit 50 in the front-rear direction, and the travel of the second headed bolt P2 is blocked (stopped) by the closure portion 33. According to this configuration, the headed bolts P can be readily guided one by one from the slit 50 to the discharge hole 22.

The guide rails 10 are inclined with respect to the horizontal direction so as to slope downward as the guide rails 10 extend from the upstream side (rear) toward the downstream side (front) in the front-rear direction. In the case where the guide rails 10 are inclined with respect to the horizontal direction, the second headed bolt P2 is more likely to enter the introduction portion 32 when the movable member 31 is at the first position S1. Even in such a case, the stop mechanism 40 can stop the travel of the second headed bolt P2 at the slit 50, thereby substantially preventing the second headed bolt P2 from entering the introduction portion 32 when the movable member 31 is at the first position S1.

Since the guide rails 10 are inclined with respect to the horizontal direction, the headed bolts P can smoothly travel by their own weights.

### (Other Embodiments)

Although the present disclosure has been described by way of preferred embodiments, such descriptions are not limiting, and various modifications, substitutions, or combinations are of course possible.

In the rear side surface 31a of the movable member 31, the introduction portion 32 and the closure portion 33 may be adjacent to each other with another portion interposed therebetween, instead of being directly adjacent to each other. The closure portion 33 need not to extend straight.

The actuator 41 of the stop mechanism 40 may stop the second headed bolt P2 at the slit 50 by extending the rod 44 into a space between the first headed bolt P1 and the second headed bolt P2.

The stop mechanism 40 may directly press the shaft portion Pa of the second headed bolt P2. In this case, it is preferable that the pair of guide rails 10 have a hole, which is a through hole extending in the left-right direction and allows the rod 44 to pass therethrough.

The stop mechanism 40 may push the second headed bolt P2 in the up-down direction or the front-rear direction.

The actuator 41 of the stop mechanism 40 is not limited to the air cylinder mechanism, and may be, for example, a gas cylinder mechanism (using a gas other than air), a hydraulic cylinder mechanism, an electric cylinder mechanism, a ball screw mechanism, or the like. The same also applies to the actuator 36 of the guide mechanism 30.

The stop mechanism 40 may have any configuration as long as it can stop the travel of the second headed bolt P2 at the slit 50.

The guide rails 10 may extend obliquely upward with respect to the horizontal direction as they extend from rear to front, or may extend straight in the horizontal direction.

The lower end of the slit 50 between the pair of guide rails 10 may be covered with a lid.

The components P are not limited to headed bolts, and may be other headed components (for example, headed pins, headed rivets, or the like).

### INDUSTRIAL APPLICABILITY

The present disclosure is applicable to a component supply device, and thus is significantly useful and has high industrial applicability.

### DESCRIPTION OF REFERENCE CHARACTERS

- 1: Bolt Supply Device (Component Supply Device)
- S1: First Position
- S2: Second Position
- A: Front-Rear Direction (First Direction)
- A1: Upstream Side (Rear)
- A2: Downstream Side (Front)
- B: Left-Right Direction (Second Direction)
- B1: Right
- B2: Left
- C: Up-Down Direction
- C1: Upper
- C2: Lower
- H: Horizontal Direction
- P: Headed Bolt (Component)
- Pa: Shaft Portion
- Pb: Head Portion
- P1: First Headed Bolt (First Component)
- P2: Second Headed Bolt (Second Component)
- 10: Guide Rail
- 11: Main Guide Rail
- 12: Sub Guide Rail
- 13: Upper Edge Portion
- 14: Inner Surface
- 20: Discharge Mechanism
- 21: Discharge Member
- 21a: First Portion
- 21b: Second Portion
- 22: Discharge Hole
- 23: Discharge Chamber
- 30: Guide Mechanism
- 31: Movable Member
- 31a: Rear Side Surface (Side Surface)
- 32: Introduction Portion
- 33: Closure Portion
- 34: Hole Portion
- 35: Connection Portion
- 36: Actuator
- 37: Cylinder
- 37a: First Air Chamber
- 37b: Second Air Chamber
- 37c: First Port
- 37d: Second Port
- 38: Piston
- 39: Rod
- 40: Stop Mechanism
- 41: Actuator
- 42: Cylinder
- 42a: First Air Chamber
- 42b: Second air chamber
- 42c: First Port
- 42d: Second Port
- 43: Piston
- 44: Rod
- 50: Slit
- 51: Downstream End (Front End)

## Claims

1. A component supply device comprising:
a pair of guide rails that extend in parallel with each other in a first direction so as to form a slit between the guide rails and that are configured to allow a plurality of components, each including a shaft portion and a head portion having a larger diameter than the shaft portion, to travel through the slit in the first direction;
a discharge mechanism disposed downstream of the slit in the first direction and having a discharge hole through which the plurality of components are discharged;
a guide mechanism configured to guide the plurality of components one by one from the slit to the discharge hole; and
a stop mechanism configured to stop travel of the components at the slit,
the first direction including a component in a horizontal direction,
the shaft portion of each component being inserted into the slit downward from above, and the head portion of each component being hooked on upper edge portions of the guide rails,
the plurality of components including: a first component that is located first from a downstream side in the first direction; and a second component that is located second from the downstream side in the first direction,
the guide mechanism including a movable member that faces the discharge hole from above at a position downstream of the slit in the first direction and that is configured to move between a first position and a second position in a second direction, which is a width direction of the slit,
the movable member including:
an introduction portion constituted by a cutout formed in a side surface, which is an upstream side surface of the movable member in the first direction, the introduction portion being configured to receive the first component supplied from the slit and introduced thereinto when the movable member is at the first position;
a closure portion constituted by the side surface so as to be adjacent to the introduction portion in the second direction, the closure portion being configured to close the slit when the movable member is at the second position; and
a hole portion constituted by a hole formed downstream of the side surface in the first direction, the hole portion being configured to cause the first component having moved from the introduction portion to fall into the discharge hole when the movable member is at the second position,
the stop mechanism being configured to stop travel of the second component at the slit.

2. The component supply device of claim 1, wherein
the stop mechanism stops the travel of the second component at the slit by pushing the second component in the second direction, thereby pressing the second component against the pair of guide rails.

3. The component supply device of claim 2, wherein
the stop mechanism pushes the head portion of the second component in the second direction, thereby pressing the shaft portion of the second component against an inner surface, in the second direction, of the pair of guide rails.

4. The component supply device of claim 2 or 3, wherein
the stop mechanism is constituted by an actuator that moves, in the second direction, a rod extending in the second direction.

5. The component supply device of any one of claims 1 to 4, wherein
the stop mechanism stops the second component at the slit when the movable member is at the first position, and does not stop the second component at the slit when the movable member is at the second position, and
when the movable member is at the second position, the second component travels to a downstream end of the slit in the first direction, and the travel of the second component is blocked by the closure portion.

6. The component supply device of any one of claims 1 to 5, wherein
the pair of guide rails are inclined with respect to the horizontal direction so as to slope downward as the guide rails extend from an upstream side to a downstream side in the first direction.

7. The component supply device of any one of claims 1 to 6, wherein
the components are headed bolts.
